# EUROPÄISCHE PATENTSCHRIFT

(11) **EP 0 819 841 B1**
(45) Veröffentlichungstag und Bekanntmachung des Hinweises auf die Patenterteilung: **27.02.2002**
(21) Anmeldenummer: 97109637.5
(22) Anmeldetag: 13.06.1997
(51) Int. Cl.: F02F 7/00

(54) **Zylinderkopfhaube für eine Brennkraftmaschine**
Cylinder head cover for an internal combustion engine
Couvercle-culasse pour un moteur à combustion interne

(30) Priorität: 20.07.1996 DE 19629308
(43) Veröffentlichungstag der Anmeldung: 21.01.1998
(73) Patentinhaber: DaimlerChrysler AG, 70567 Stuttgart (DE)
(72) Erfinder: Gruber, Gerhard, 71522 Backnang (DE); Klingmann, Rolf, 73655 Plüderhausen (DE); Hofheinz, Werner, 73207 Plochingen (DE)

(56) Entgegenhaltungen:
- DE-A- 4 437 714
- FR-A- 2 149 881
- US-A- 4 993 375
- US-A- 5 129 371

## Beschreibung

Die Erfindung betrifft eine Zylinderkopfhaube einer direkteinspritzende Brennkraftmaschine mit den im Oberbegriff des Patentanspruchs 1 angegebenen Merkmalen.

Aus der DE 43 15 233 A1 ist eine Zylinderkopfhaube der gattungsgemäßen Art bekannt, die im Bereich des Einspritzdüsenhalters eingezogen ausgebildet und bis zu einer aus dem Zylinderkopf weit herausragenden Dichthülse heruntergezogen ist. Die Dichthülse umgibt den Einspritzdüsenhalter, der von einer im Zylinderkopf angeordneten Spannpratze über die Dichthülse auf einen Sitz im Zylinderkopf gedrückt wird.

Bei dieser Ausführung wird das Eindringen von Kraftstoff in den zwischen Zylinderkopf und Zylinderkopfhaube liegenden Ölraum vermieden.

Der Erfindung liegt die Aufgabe zugrunde, eine Zylinderkopfhaube nach dem Gattungsbegriff so auszubauen, daß sich eine vereinfachte Bearbeitung der zylinderkopfhaubenseitigen Anlagefläche des Zylinderkopfes ergibt und daß bei Auftreten von Kraftstoffleckage ein Entzünden des Kraftstoffes an heißen Teilen der Brennkraftmaschine ausgeschlossen ist.

Die Aufgabe wird durch die im Kennzeichen des Anspruchs 1 angegebenen Merkmale gelöst.

In den Unteransprüchen sind noch förderliche Weiterbildungen der Erfindung angegeben.

Durch die erfindungsgemäßen Maßnahmen, nämlich die Zylinderkopfhaube im Bereich des Einspritzdüsenhalters bis zum Zylinderkopf herunterzuziehen, ist eine wesentlich vereinfachte Bearbeitung der zylinderkopfhaubenseitigen Anlagefläche des Zylinderkopfes möglich, da keine aus dem Zylinderkopf in die Zylinderkopfhaube ragenden Teile, wie eine den Einspritzdüsenhalter umgebende Dichthülse, bei der Bearbeitung der Anlagefläche hinderlich sind. Des weiteren ist durch die Anordnung und den Verlauf der ablaufrinnenartigen Vertiefung der Zylinderkopfhaube gewährleistet, daß im Falle von Kraftstoffleckage, sei es durch undichte Stellen am Einspritzdüsenhalter oder durch eine undichte Anschlußverbindung zwischen dem Einspritzdüsenhalter und der Einspritzleitung, der Kraftstoff zur relativ kalten Einlaßseite zielgerichtet und ungefährlich abfließen kann.

Ein weiterer Vorteil der Erfindung ergibt sich noch dadurch, daß der heruntergezogene Teil der Zylinderkopfhaube zugleich Begrenzungs- bzw. Schottwand für einen im Zylinderkopf liegenden Ölraum ist.

Außerdem kann der heruntergezogene Teil der Zylinderkopfhaube einen als Kugel ausgebildeten Abstützkörper enthalten, wobei beide Bauteile getrennt ausgeführt oder aus einem Stück gefertigt sein können.

Der Abstützkörper kann auch als Stift ausgebildet sein, der den heruntergezogenen Teil der Zylinderkopfhaube durchbricht und fest in einer Sackbohrung im Zylinderkopf steckt. Diese Ausführung kann noch die Abdichtwirkung der Umlaufdichtung verstärken, insbesondere dann, wenn die Umlaufdichtung nicht nur den Einspritzdüsenhalter und die Befestigungsschraube, sondern auch noch den Abstützkörper umgibt.

Der heruntergezogene Teil der Zylinderkopfhaube erweist sich bei mehrzylindrigen Brennkraftmaschinen als besonders vorteilhaft, da dieser Teil zu einem in Längsrichtung der Brennkraftmaschine verlaufenden durchgehenden Schacht mit querverlaufenden Abzweigungen als ablaufrinnenartige Vertiefungen ausgebildet sein kann.

Die Erfindung ist in der Zeichnung dargestellt und wird im folgenden anhand von Ausführungsbeispielen näher beschrieben. Es zeigen
- Fig. 1: eine erfindungsgemäße Zylinderkopfhaube mit eingezogenem Teil und von diesem abzweigenden Vertiefungen in Draufsicht,
- Fig. 2: lediglich die eingezogene Zylinderkopfhaube mit Vertiefung im Querschnitt,
- Fig. 3: den heruntergezogenen Teil mit kugelförmigem Abstützkörper zwischen Spannpratze und Zylinderkopf,
- Fig. 4: den heruntergezogenen Teil mit diesem durchdringenden Abstützkörper und
- Fig. 5: den heruntergezogenen Teil mit Nut für die Umlaufdichtung in Pfeilrichtung a nach Fig.2, wobei die unterbrochenen Linien eine Ausführung darstellen, bei der die Umlaufdichtung auch die Bohrung für den Abstützkörper (Fig.4) mitumgibt.

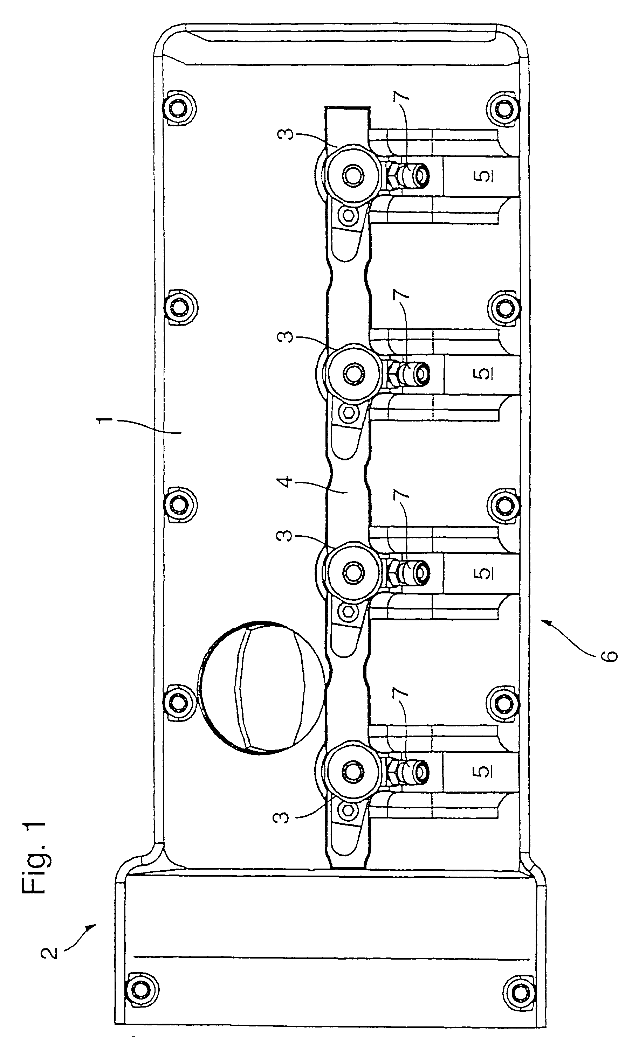

Eine einteilig ausgebildete Zylinderkopfhaube 1 für eine mehrzylindrige direkteinspritzende Brennkraftmaschine 2 ist gemäß Fig.1 in Längsmitte dieser Brennkraftmaschine im Bereich der Einspritzdüsenhalter 3 derart eingezogen ausgeführt, daß sich ein über alle Einspritzdüsenhalter 3 erstreckender durchgehender Schacht 4 ergibt.

Von diesem Schacht 4 zweigen in Höhe der Einspritzdüsenhalter 3 ablaufrinnenartige Vertiefungen 5 ab, die jeweils quer zum Schacht 4 verlaufen und zur Einlaßseite 6 der Brennkraftmaschine 2 führen. Jeder Einspritzdüsenhalter 3 weist einen Anschluß 7 für eine nicht näher dargestellte Einspritzleitung auf. Die Anschlußverbindungen zwischen Einspritzdüsenhalter 3 und Einspritzleitungen liegen über den jeweils zugeordneten Vertiefungen 5, so daß im Falle von Undichtigkeiten der Kraftstoff zunächst in dem Schacht gesammelt werden kann und über die ablaufrinnenartige Vertiefung 5 abfließen kann.

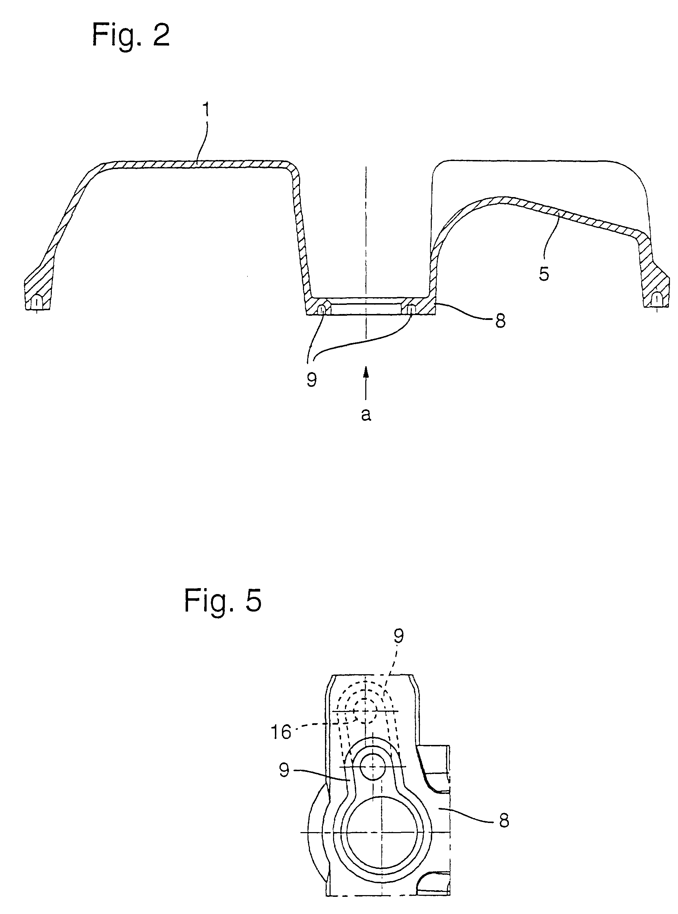

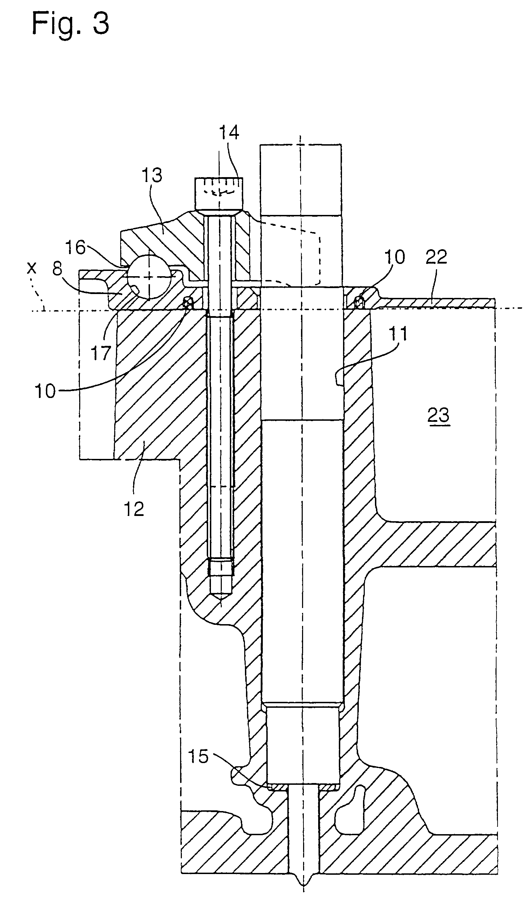

In Fig.2 ist die besondere Ausgestaltung der eingezogen ausgebildeten Zylinderkopfhaube 1 mit der einlaßseitigen ablaufrinnenartigen Vertiefung 5 gezeigt. Der heruntergezogene Teil 8 ist auf seiner Unterseite mit einer Nut 9 versehen, die für eine Umlaufdichtung 10 (s.Fig.3) bestimmt ist.

Jeder Einspritzdüsenhalter 3 steckt in einer Aufnahmebohrung 11 im Zylinderkopf 12 und wird von einer Spannpratze 13 mittels einer diese Spannpratze 13 und den heruntergezogenen Teil 8 der Zylinderkopfhaube 1 durchdringenden Befestigungsschraube 14 auf ihren Sitz 15 im Zylinderkopf 12 gepreßt (Fig.3). Die Spannpratze 13 stützt sich auf einem in dem heruntergezogenen Teil 8 eingelagerten Abstützkörper 16 ab, der in Fig.3 als Kugel ausgebildet ist. Die Kugel und Teil 8 können einstückig sein, wobei die Kugel aus dem Teil 8 herausgeformt ist, oder die Kugel und das Teil 8 können zwei getrennte Bauteile bilden. In diesem Fall ist die Kugel in das mit einer entsprechenden Ausnehmung 17 versehene Teil 8 fest eingepreßt.

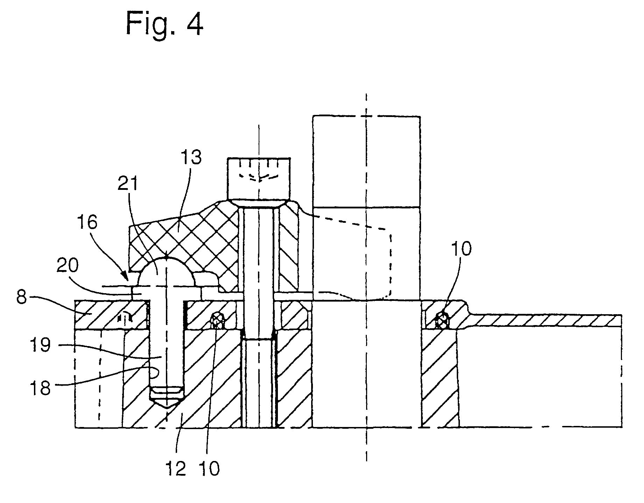

In Fig.4 besteht der Abstützkörper 16 aus einem das Teil 8 durchdringenden und in einer Sackbohrung 18 im Zylinderkopf 12 fixierten Stift 19 und aus einem auf dem Teil 8 aufliegenden Bund 20 sowie aus einem Halbkugelkopf 21, auf der sich die Spannpratze 13 abstützt.

In beiden Ausführungsbeispielen gemäß den Fig.3,4 umgibt die Umlaufdichtung 10 den Einspritzdüsenhalter 3 und die Befestigungsschraube 14. Die Umlaufdichtung kann aber auch gemäß Fig.5 zusätzlich den Abstützkörper 16 mit umgeben (s. unterbrochene Linien), falls die Flächenpressung zwischen dem Bund des Abstützkörpers 16 und dem Teil 8 für eine rein metallische Dichtung nicht ausreicht.

Der heruntergezogene Teil 8 der Zylinderkopfhaube 1 hat nicht nur die Funktion eines Auffangbeckens, sondern darüber hinaus die Funktion einer Schottwand bzw. Begrenzungswand 22 für einen im Zylinderkopf 12 liegenden Ölraum 23 inne.

Der Zylinderkopf 12 ist im Bereich der Trennebene x zwischen Zylinderkopf und Zylinderkopfhaube 1 so ausgebildet, daß eine ungehinderte spanabhebende Bearbeitung möglich ist, da keine Teile, wie eine den Einspritzdüsenhalter umgebende Dichthülse, aus dem Zylinderkopf herausragen.

## Patentansprüche

1. Zylinderkopfhaube einer direkteinspritzende Brennkraftmaschine mit einem im Zylinderkopf zwischen Gaswechselventilen angeordneten Einspritzdüsenhalter und mit einer Spannpratze zur Lagefixierung des Einspritzdüsenhalters in einer Aufnahmebohrung im Zylinderkopf, wobei die Zylinderkopfhaube im Bereich des Einspritzdüsenhalters eingezogen ausgebildet ist und einen Durchtritt für den Einspritzdüsenhalter aufweist,
**dadurch gekennzeichnet,**
**daß** die im Bereich des Einspritzdüsenhalters (3) eingezogene Zylinderkopfhaube (1) bis zum Zylinderkopf (12) heruntergezogen ist und daß von diesem Bereich ausgehend eine ablaufrinnenartige Vertiefung (5) zur Einlaßseite der Brennkraftmaschine (2) hinführt.

2. Zylinderkopfhaube nach Anspruch 1,
**dadurch gekennzeichnet, daß** die Vertiefung (5) quer zur Längsebene der Brennkraftmaschine im Bereich des für den Anschluß (7) einer Einspritzleitung vorgesehenen Einspritzdüsenhalters (3) verläuft.

3. Zylinderkopfhaube nach Anspruch 1, mit einer die Spannpratze durchsetzenden und in den Zylinderkopf eingeschraubten Befestigungsschraube zur Lagefixierung des Einspritzdüsenhalters, an der das eine freie Ende der Spannpratze aufliegt, während das andere freie Ende der Spannpratze sich über einen Abstützkörper zylinderkopfseitig abstützt,
**dadurch gekennzeichnet,**
**daß** zwischen dem plan auf dem Zylinderkopf (12) aufliegenden heruntergezogenen Teil (8) der Zylinderkopfhaube (1) und dem Zylinderkopf (12) eine den Einspritzdüsenhalter (3) und die Befestigungsschraube (14) oder zusätzlich den Abstützkörper (16) gemeinsam umgebende Umlaufdichtung (10) vorgesehen ist.

4. Zylinderkopfhaube nach Anspruch 3,
**dadurch gekennzeichnet,**
**daß** der heruntergezogene Teil (8) der Zylinderkopfhaube (1) Begrenzungswand (22) für einen Ölraum (23) im Zylinderkopf (12) bildet.

5. Zylinderkopfhaube nach Anspruch 3,
**dadurch gekennzeichnet,**
**daß** der Abstützkörper (16) als Kugel ausgebildet ist, die mit dem heruntergezogenen Teil (8) der Zylinderkopfhaube (1) fest verbunden ist

6. Zylinderkopfhaube nach Anspruch 3,
**dadurch gekennzeichnet,**
**daß** der Abstützkörper (16) als zylindrischer Stift (19) mit Bund (20) und Halbkugelkopf (21) ausgebildet ist und den heruntergezogenen Teil (8) der Zylinderkopfhaube (1) durchdringend in einer Sackbohrung (18) im Zylinderkopf (12) steckt, wobei der Halbkugelkopf (21) eine Abstützfläche für die Spannpratze (13) und der heruntergezogene Teil (8) eine Auflagefläche für den sich an den Halbkugelkopf (21) anschließenden Bund (20) bildet.

7. Zylinderkopfhaube nach Abspruch 1,
**dadurch gekennzeichnet,**
**daß** bei einer mehrzylindrigen Brennkraftmaschine (2) der heruntergezogene Teil (8) der Zylinderkopfhaube (1) - in Längsrichtung der Brennkraftmaschine gesehen - zu einem durchgehenden Schacht (4) ausgebildet ist.

## Claims

1. A valve cover in a direct injection internal combustion engine with an injection nozzle holder positioned between charge changing valves in the cylinder head and with a clamping attachment to fix the position of the injection nozzle holder in a location hole in the cylinder head, the valve cover in the area of the injection nozzle holder being convergent-divergent and having a hole for the injection nozzle holder,
**characterised in that**
the valve cover (1) which is convergent-divergent in the area of the injection nozzle holder (3) is drawn down to the cylinder head (12) and that starting from this area a recess in the style of a discharge channel runs to the intake side of the internal combustion engine (2).

2. A valve cover in accordance with claim 1,
**characterised in that**
the recess (5) runs at right angles to the longitudinal plane of the internal combustion engine in the area of the injection nozzle holder (3) provided for the connection (7) of an injection line.

3. A valve cover in accordance with claim 1, with a fastening screw which passes through the clamping attachment and is screwed into the cylinder head to fix the position of the injection nozzle holder, on which one of the free ends of the clamping attachment lies, while the other free end of the clamping attachment is supported on a supporting element on the cylinder head,
**characterised in that**
a seal (10) surrounding the injection nozzle holder (3) and the fastening screw (14) or also the supporting element (16) is provided between the drawn down part (8) of the valve cover (1) lying flat on the cylinder head (12) and the cylinder head (12).

4. A valve cover in accordance with claim 3,
**characterised in that**
the drawn down part (8) of the valve cover (1) forms the limiting wall (22) of an oil chamber (23) in the cylinder head (12).

5. A valve cover in accordance with claim 3,
**characterised in that**
the supporting element (16) is designed as a sphere which is connected to the drawn down part (8) of the valve cover (1) in such a way that it cannot move.

6. A valve cover in accordance with claim 3,
**characterised in that**
the supporting element (16) is designed as a cylindrical pin (19) with a collar (20) and a hemispherical head (21) and the drawn down part (8) of the valve cover (1) penetrates into a pocket hole (18) in the cylinder head (12), the hemispherical head (21) forming a supporting surface for the clamping attachment (13) and the drawn down part (8) forming a bearing surface for the collar (20) adjoining the hemispherical head (21).

7. A valve cover in accordance with claim 1,
**characterised in that**
in a multi-cylinder internal combustion engine (2) the drawn down part (8) of the valve cover (1) - viewed along the longitudinal axis of the internal combustion engine - is designed as a continuous shaft (4).

## Revendications

1. Couvercle de culasse d'un moteur à combustion interne à injection directe, comportant des porte-injecteurs agencés dans la culasse entre les soupapes d'échange de gaz et comportant une griffe de serrage pour fixer la position du porte-injecteurs dans un perçage de réception dans la culasse, le couvercle de culasse étant réalisé en retrait au niveau du porte-injecteurs et présentant une traversée pour le porte-injecteurs,
**caractérisé en ce que** :
le couvercle de culasse (1) en retrait au niveau du porte-injecteurs (3) est tiré vers le bas jusqu'à la culasse (12), et **en ce qu'**à partir de cette zone, un renfoncement (5) en forme de rainure d'écoulement mène vers le côté admission du moteur à combustion interne (2).

2. Couvercle de culasse selon la revendication 1, **caractérisé en ce que** le renfoncement (5) s'étend perpendiculairement au plan longitudinal du moteur à combustion interne dans la région du porte-injecteurs (3) prévu pour le raccordement (7) d'une conduite d'injection.

3. Couvercle de culasse selon la revendication 1, comportant une vis de fixation traversant la griffe de serrage, vissée dans la culasse et destinée à fixer la position du porte-injecteurs, sur laquelle vient s'appuyer une extrémité libre de la griffe de serrage, tandis que l'autre extrémité de la griffe de serrage prend appui du côté culasse via un corps d'appui,
**caractérisé en ce que** :
entre la partie tirée vers le bas (8) du couvercle de culasse (1), laquelle s'applique à plat sur la culasse (12), et la culasse (12) est prévu un joint d'étanchéité périphérique (10) entourant conjointement le porte-injecteurs (3) et la vis de fixation (14) ou en supplément le corps d'appui (16).

4. Couvercle de culasse selon la revendication 3, **caractérisé en ce que** la partie tirée vers le bas (8) du couvercle de culasse (1) forme une paroi de délimitation (22) pour une chambre à huile (23) dans la culasse (12).

5. Couvercle de culasse selon la revendication 3, **caractérisé en ce que** le corps d'appui (16) est réalisé sous la forme d'une bille qui est solidairement reliée à la partie tirée vers le bas (8) du couvercle de culasse (1).

6. Couvercle de culasse selon la revendication 3, **caractérisé en ce que** le corps d'appui (16) est réalisé sous la forme d'une tige cylindrique (19) qui comporte une collerette (20) et une tête hémisphérique (21) et qui est enfichée dans un perçage borgne (18) dans la culasse (12) en traversant la partie tirée vers le bas (8) du couvercle de culasse (1), la tête hémisphérique (21) formant une surface d'appui pour la griffe de serrage (13) et la partie tirée vers le bas (8) formant une surface d'appui pour la collerette (20) qui se raccorde à la tête hémisphérique (21).

7. Couvercle de culasse selon la revendication 1, **caractérisé en ce que** dans un moteur à combustion interne (2) à cylindres multiples, la partie tirée vers le bas (8) du couvercle de culasse (1) est réalisée sous forme d'un puits continu (4), vu en direction longitudinale du moteur à combustion interne.
